# EUROPEAN PATENT APPLICATION

(11) **EP 4 517 966 A1**
(43) Date of publication of application: **05.03.2025**
(21) Application number: 24197870.9
(22) Date of filing: 02.09.2024
(51) Int. Cl.: H01M 50/213, H01M 50/503, H01M 50/516

(54) **BATTERY MODULE**

(30) Priority: 04.09.2023 KR 20230117104
(71) Applicant: SAMSUNG SDI CO., LTD., Giheung-gu Yongin-si, Gyeonggi-do 17084 (KR)
(72) Inventor: Kang, Il Oh, 17084 Yongin-si, Gyeonggi-do (KR)
(74) Representative: Gulde & Partner

(57) **Abstract**

A battery module includes: a plurality of battery cells; a holder that accommodates the plurality of battery cells; a tab member installed at the holder to be welded to electrode terminals of the plurality of battery cells; and an insulating tape that insulates the tab member. The tab member includes a main body portion disposed on the holder, an extension portion having a width and extending along at least a portion of the main body portion, a neck portion bent downward from the extension portion to be disposed inside an opening of the holder, and a tab portion bent from the neck portion to be connected to a respective one of the electrode terminals of the plurality of battery cells, and the extension portion and the opening form an outlet at an upper portion of the respective one of the electrode terminals.

## Description

### FIELD

The present disclosure relates to a battery module, and more specifically, to a battery module connecting battery cells with a tab member.

### BACKGROUND

A rechargeable battery is a battery that is capable of being repeatedly charged and discharged, unlike a primary battery. Small-capacity rechargeable batteries may be used in portable small electronic devices such as mobile phones, laptop computers, or camcorders. Large-capacity and high-density rechargeable batteries may be used as a power source for driving a motor of a hybrid vehicle or an electric vehicle or an energy storage device of the hybrid vehicle or the electric vehicle.

### SUMMARY

Embodiments of the present disclosure provide a battery module that forms an outlet between a tab member and a holder when there is a step difference between the holder and a battery cell and the tab member is bent.

Embodiments of the present disclosure provide a battery module that forms an outlet between a tab member and a holder when there is a step difference between the holder and a battery cell, the tab member is bent, and an insulating tape is attached to the tab member to insulate the tab member.

Embodiments of the present disclosure provide a battery module including a hole in a holder.

A battery module according to embodiments of the present disclosure includes: a plurality of battery cells; a holder that accommodates the plurality of battery cells; a tab member installed at the holder to be welded to electrode terminals of the plurality of battery cells; and an insulating tape that insulates the tab member. The tab member comprises a main body portion disposed on the holder, an extension portion having a width and extending along at least a portion of the main body portion, a neck portion bent downward from the extension portion to be disposed inside an opening of the holder, and a tab portion bent from the neck portion to be connected to a respective one of the electrode terminals of the plurality of battery cells, and wherein the extension portion and the opening form an outlet at an upper portion of the respective one of the electrode terminals.

The insulating tape may include: a main body attachment portion attached to the main body portion; an extension attachment portion connected to the main body attachment portion to be attached to the extension portion; and a tab attachment portion separated by a cutting line with respect to the main body attachment portion and the extension attachment portion to be attached to the tab portion and the respective one of the electrode terminals.

The insulating tape may further include a connection portion connecting the main body attachment portion and the extension attachment portion to the tab attachment portion and separating the main body attachment portion and the extension attachment portion from the tab attachment portion in an attachment process.

Each of the plurality of battery cells may be cylindrical batteries, and the holder may comprise a plurality of circular openings corresponding to both ends along an axial direction of the plurality of battery cells.

The extension portion may comprise first and second branches disposed on respective sides of a slit opening formed in an extension direction, the neck portion may comprise a first neck portion connected to the first branch of the extension portion and a second neck portion connected to the second branch of the extension portion, and the tab portion may comprise a first tab portion connected to the first neck portion and a second tab portion connected to the second neck portion.

The battery module may further include a case accommodating the holder. The case may be connected to the outlet and may include a through hole on at least one side of the case to dissipate heat from an interior of the case.

The battery module may further comprise a second tab member.

In some embodiments, there is provided a method of manufacturing a battery module. The method may comprise providing a holder that accommodates a plurality of battery cells; installing a tab member installed in holder, the tab member to be welded to electrode terminals of the plurality of battery cells; and installing an insulating tape that insulates the tab member in the holder, wherein the tab member comprises: a main body portion disposed on the holder; an extension portion having a width and extending along at least a portion of the main body portion; a neck portion bent downward from the extension portion to be disposed inside an opening of the holder; and a tab portion bent from the neck portion to be connected to a respective one of the electrode terminals of the plurality of battery cells, and wherein the extension portion and the opening form an outlet at an upper portion of the respective one of the electrode terminals.

The insulating tape may comprise a main body attachment portion attached to the main body portion; an extension attachment portion connected to the main body attachment portion to be attached to the extension portion; and a tab attachment portion separated by a cutting line with respect to the main body attachment portion and the extension attachment portion, the tab attachment portion to be attached to the tab portion and the respective one of the electrode terminals. The method may further comprise attaching the main body attachment portion to the main body portion; attaching the extension attachment portion to the extension portion; and attaching the tab attachment portion to the tab portion and the respective one of the electrode terminals.

The insulating tape may further comprise a connection portion. The method may further comprise connecting the main body attachment portion and the extension attachment portion to the tab attachment portion with the connection portion and separating the main body attachment portion and the extension attachment portion from the tab attachment portion with the connection portion.

Each of the plurality of battery cells may comprise cylindrical batteries, and the holder may comprise a plurality of circular openings corresponding to both ends along an axial direction of the plurality of battery cells.

The method may further comprise forming the plurality of circular openings in the holder.

The extension portion may comprise first and second branches disposed on respective sides of a slit opening formed in an extension direction, the neck portion may comprise a first neck portion connected to the first branch of the extension portion and a second neck portion connected to the second branch of the extension portion, and the tab portion may comprise a first tab portion connected to the first neck portion and a second tab portion connected to the second neck portion.

The method may further comprise forming the tab member at least in part by: forming the first and second branches of the extension portion on respective sides of the slit opening formed in the extension direction; forming the first neck portion connected to the first branch of the extension portion and the second neck portion connected to the second branch of the extension portion; and forming the first tab portion connected to the first neck portion and the second tab portion connected to the second neck portion.

The method may further comprise providing a case accommodating the holder and connecting the case to the outlet, wherein the case includes a through hole on at least one side of the case to dissipate heat from an interior of the case.

The method may further comprise arranging the plurality of battery cells in the holder.

In some embodiments there is provided a battery module comprising: a holder that accommodates a plurality of battery cells; a tab member installed at the holder to be welded to electrode terminals of the plurality of battery cells; and an insulating tape that insulates the tab member. The tab member may comprise a main body portion disposed on the holder; an extension portion having a width and extending along at least a portion of the main body portion; a neck portion bent downward from the extension portion to be disposed inside an opening of the holder; and a tab portion bent from the neck portion to be connected to a respective one of the electrode terminals of the plurality of battery cells, and wherein the extension portion and the opening form an outlet at an upper portion of the respective one of the electrode terminals.

The insulating tape may comprise a main body attachment portion attached to the main body portion; an extension attachment portion connected to the main body attachment portion to be attached to the extension portion; and a tab attachment portion separated by a cutting line with respect to the main body attachment portion and the extension attachment portion, the tab attachment portion to be attached to the tab portion and the respective one of the electrode terminals.

The insulating tape may further comprise a connection portion connecting the main body attachment portion and the extension attachment portion to the tab attachment portion and separating the main body attachment portion and the extension attachment portion from the tab attachment portion in an attachment process.

The extension portion may comprise first and second branches disposed on respective sides of a slit opening formed in an extension direction, the neck portion may comprise a first neck portion connected to the first branch of the extension portion and a second neck portion connected to the second branch of the extension portion, and the tab portion may comprise a first tab portion connected to the first neck portion and a second tab portion connected to the second neck portion.

The battery module of the embodiments may improve safety against thermal runaway by dissipating a heat in advance through an outlet formed between a tab member and a holder. The battery module of the embodiments may include a hole in a case to dissipate a heat so that it further improves the safety against thermal runaway.

The battery module of the embodiments may include an insulating tape including an extension attachment portion connected to a body attachment portion and a tab attachment portion separated from the extension attachment portion to be attached to a tab portion and an electrode terminal, so that it prevents corrosion of the tab portion and the electrode terminal welded and stably maintains an open state of an outlet (or a discharge port) not to interfere with prevention of the thermal runaway.

### BRIEF DESCRIPTION OF THE DRAWINGS

FIG. 1 is a perspective view of a rechargeable battery module according to some embodiments of the present disclosure.
FIG. 2 is an exploded perspective view showing a state in which an insulating tape is separated from the rechargeable battery module of FIG. 1.
FIG. 3 is an exploded perspective view showing a state in which a tab member is separated from the rechargeable battery module of FIG. 2.
FIG. 4 is a perspective view of the tab member disclosed in FIGS. 1 to 3.
FIG. 5 is a perspective view showing a state in which the insulating tape is attached to a welding portion between an electrode terminal and the tab member in the rechargeable battery module of FIG. 1.
FIG. 6 is a plan view showing a state before the insulating tape is attached to the tab member of FIG. 5.
FIG. 7 is a plan view showing a state in which the insulating tape is attached to the tab member of FIG. 6.
FIG. 8 is a cross-sectional perspective view taken along a line VIII-VIII in a state in which the rechargeable battery module of FIG. 1 is included within a case.
FIG. 9 is a cross-sectional perspective view taken along a line IX-IX in a state in which the rechargeable battery module of FIG. 1 is included within the case.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

A rechargeable battery may be used in a rechargeable battery module including a plurality of battery cells connected in series and/or in parallel to drive the motor of a hybrid vehicle which may require relatively high energy density. For example, a rechargeable battery module may be formed by connecting electrode terminals of the plurality of battery cells. The number of battery cells provided may correspond to a desired amount of electric power to implement a relatively high output rechargeable battery module (e.g. the rechargeable battery module of an electric vehicle).

For example, the rechargeable battery module may be formed by accommodating the plurality of battery cells in a holder and connecting the plurality of battery cells in series and/or in parallel through a tab. The rechargeable battery module may include tabs that connect the battery cells and a battery management system connected to the tabs as a voltage and a current may be high depending on a usage condition of a consumer.

In this case, an insulating tape may be used to insulate the tabs. Because the insulating tape may be integrally formed, there may be a step difference between the holder and the battery cell. Thus, if the tab is bent, the insulating tape is attached to upper sides of the holder and the tab, so that the insulating tape may not directly insulate a welding portion between the electrode terminal and the tab. In other words, the welding portion between the electrode terminal and the tab forms a space separated from the insulating tape, and this portion exposed to the empty space may be vulnerable to galvanic corrosion.

Additionally, because the insulating tape closes the space between the holder and the tab member, it may be difficult to dissipate heat so risk of thermal runaway may be high. Also, a heat generated internally stays within a case that may accommodate the rechargeable battery module, so that the risk of thermal runaway may be high.

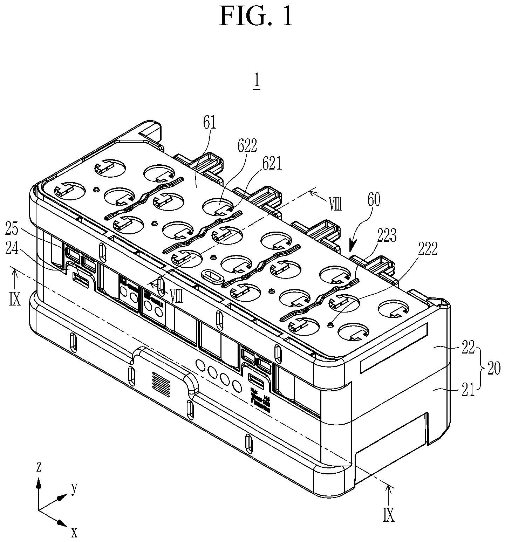

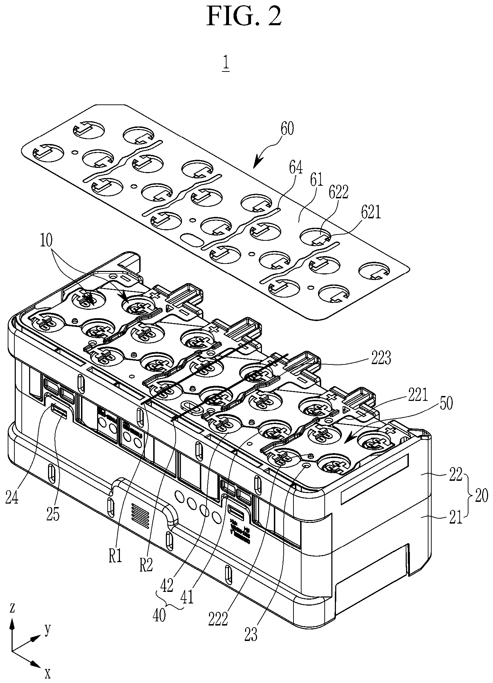

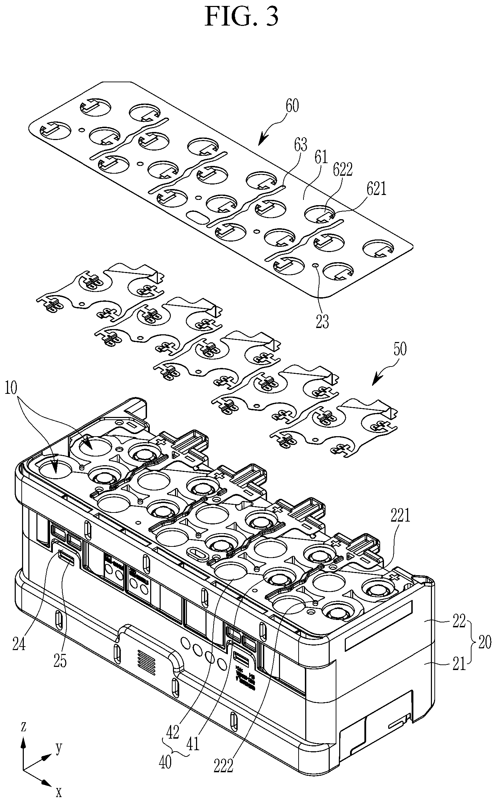

FIG. 1 is a perspective view of a rechargeable battery module according to some embodiments of the present disclosure, FIG. 2 is an exploded perspective view showing a state in which an insulating tape is separated from the rechargeable battery module of FIG. 1, and FIG. 3 is an exploded perspective view showing a state in which a tab member is separated from the rechargeable battery module of FIG. 2.

Referring to FIGS. 1 to 3, the rechargeable battery module 1 of the embodiments may include a plurality of battery cells 10, a holder 20 that may accommodate the battery cells 10, a tab member 50 welded to electrode terminals 40 of the battery cells 10, and the insulating tape 60 that electrically insulates the tab member 50.

Each of the plurality of battery cells 10 may be a cylindrical rechargeable battery, and may include electrode terminals 40 at both ends of an axial direction of the cylindrical rechargeable battery. For example, the electrode terminal 40 may include a positive electrode terminal 41 and a negative electrode terminal 42 provided at both ends along an axial direction of each battery cell 10.

The holder 20 may include a bottom holder 21 and a top holder 22. The bottom holder 21 and the top holder 22 may form a honeycomb structure therein to accommodate the plurality of battery cells 10 spaced apart in a first direction (an x-axis direction) and a second direction (a y-axis direction) crossing the first direction, so that the top holder 22 and the bottom holder 21 are coupled to each other in a third direction (a z-axis direction) crossing the second direction and are firmly fastened by a fastening member 23.

In the states shown FIGS. 1 to 3, the bottom holder 21 may accommodate lower sides of the battery cells 10, and the top holder 22 may accommodate upper sides of the battery cells 10. In the states shown in FIGS. 1 to 3, the bottom holder 21 and the top holder 22 may be fastened with the fastening member 23.

For example, the bottom holder 21 and the top holder 22 may be further coupled with a snap-fit structure having a coupling portion 24 provided outside the bottom holder 21 and a protruding portion 25 provided outside the top holder 22 corresponding to the coupling portion 24.

The plurality of battery cells 10 may be accommodated in the holder 20 arranged in a first row R1 and a second row R2 parallel to the first row R1. The first row R1 and the second row R2 may be set along the second direction and may be spaced apart from each other in the first direction. The rechargeable battery module may comprise multiple of the first and second rows R1, R2.

As an example, the negative electrode terminal 42 may be disposed at an upper portion of the first row R1, and the positive electrode terminal 41 may be disposed at a lower portion of the first row R1. In some embodiments, the positive electrode terminal 41 may be disposed at an upper portion of the second row R2, and the negative electrode terminal 42 may be disposed at a lower portion of the second row R2.

A center of an axial direction of each of the battery cells 10 disposed in the first row R1 and a center of an axial direction of each of the battery cells 10 disposed in the second row R2 may be disposed offset from each other in a direction along the first and second rows R1, R2 (e.g., in the second direction along a y-axis). For example, intervals between the battery cells 10 adjacent to each other may be the same.

For example, the battery cells 10 disposed in the second row R2 may be shifted in the second direction (the y-axis direction) with respect to the battery cells 10 disposed in the first row R1. In some embodiments, side surfaces of the two battery cells 10 disposed at ends of the first row R1 and the second row R2 may be disposed to be misaligned from disposition directions of the first row R1 and the second row R2. As such, a line passing through axial centers of the two battery cells 10 disposed at ends of the first row R1 and the second row R2 may form an angle with a line along the second row that is other than 90 degrees.

Tab members 50 may be disposed in seating grooves 221 of the bottom holder 21 and the top holder 22 to connect the electrode terminals 40 corresponding to the tab members 50. A protruding portion 222 may be provided at one side of the seating groove 221 to be coupled to a coupling hole H corresponding to the tab member 50.

For example, the seating groove 221 may set a position of the tab member 50 before the tab member 50 is welded to the electrode terminal 40 to keep the position of the tab member 50 constant. In some embodiments, the protruding portion 222 may be coupled to the coupling hole H when setting of the position of the tab member 50 is completed to prevent the tab member 50 from being separated from the seating groove 221.

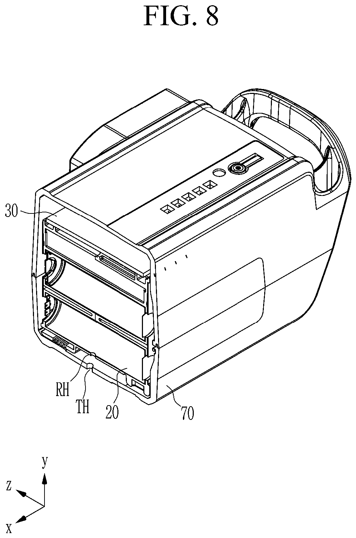

As an example, the tab members 50 may comprise nickel, and may electrically connect the battery cells 10 in parallel and/or in series to electrically connect the battery cells 10 to a battery management system (BMS) 30 of FIG. 8. The tab members 50 may be formed by punching and bending a thin plate.

As an example, the battery management system (BMS) 30 may be installed on side surfaces of the bottom holder 21 and the top holder 22. Each of the tab members 50 may have an output terminal (or an output end) 54 at one side of the first direction (the x-axis direction), so that the respective tab member is electrically connected to the battery management system (BMS) 30 through the output terminal 54. For installation of the tab members 50, side surfaces of the bottom holder 21 and the top holder 22 may be opened as appropriate.

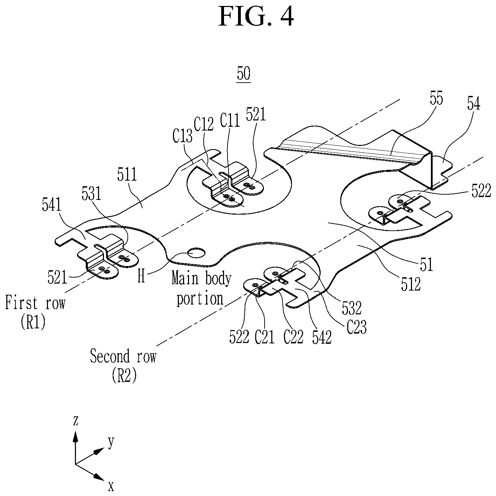

FIG. 4 is a perspective view of the tab member disclosed in FIGS. 1 to 3, and FIG. 5 is a perspective view showing a state in which the insulating tape is attached to a welding portion between the electrode terminal and the tab member in the rechargeable battery module of FIG. 1.

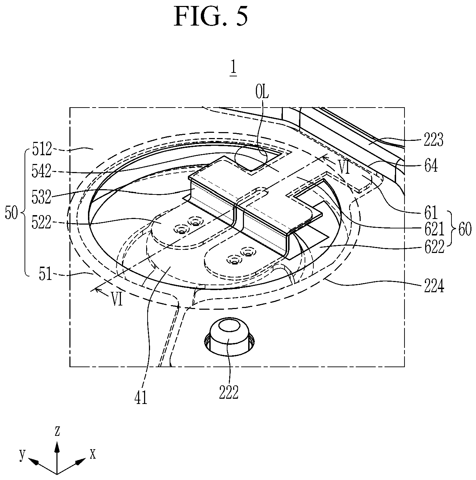

Referring to FIG. 4 and FIG. 5, the tab member 50 may include a main body portion 51, a first extension tab 541 and a second extension tab 542 that are extension portions of the tab member 50, a first tab 521 and a second tab 522 that are tab portions of the tab member 50, and a first neck 531 and a second neck 532 that are neck portions of the tab member 50.

The top holder 22 may accommodate the battery cells 10, and may include circular openings 224 that are open and correspond to both ends of the axial direction of the battery cell 10. The opening 224 may be formed in a structure corresponding to the bottom holder 21. For simplicity of explanation, a description of the bottom holder 21 is omitted.

A connection structure of the first tab 521 may include an 11th connection C11 that is bent to be welded to the negative electrode terminal 42 in two branches that extend in a height direction (the z-axis direction) through the first neck 531, a 12th connection C12 extending in a direction perpendicular to the first row R1 through the first extension tab 541, and a 13th connection C13 extending in a direction of the first row R1 through a first auxiliary portion 511 to be connected to the main body portion 51.

A connection structure of the second tab 522 may include a 21st connection C21 that is bent to be welded to the positive electrode terminal 41 in two branches that extend in the height direction (the z-axis direction) through the second neck 532, a 22nd connection C22 extending in a direction perpendicular to the second row R2 through the second extension tab 542, and a 23rd connection C23 extending in a direction of the second row R2 through a second auxiliary portion 512 to be connected to the main body portion 51.

The connection structure of the first tab 521 including the 11th connection C11, the 12th connection C12, and the 13th connection C13 and the connection structure of the second tab 522 including the 21st connection C21, the 22nd connection C22, and the 23rd connection C23 allow the negative and positive electrode terminals 42 and 41 to be connected to the main body portion 51 over a long distance.

For example, a difference between a total distance of the connection structure of the first tab 521 to a final output terminal of the tab member 50 through the main body portion 51 and a total distance of the connection structure of the second tab 522 to the final output terminal of the tab member 50 through the main body portion 51 may be minimized. In some embodiments, a voltage difference between the battery cell 10 in the first row R1 and the battery cell 10 in the second row R2 may be minimized (e.g., equal to zero).

Referring back to FIGS. 1 to 5, the main body portion 51 may be disposed between the first row R1 and the second row R2 of the battery cells 10 to be connected in the second direction (the y-axis direction). For example, the main body portion 51 extending in the second direction (the y-axis direction) may include the first auxiliary portion 511 and the second auxiliary portion 512 connected in the first direction (the x-axis direction).

The first tab 521 may be connected to negative electrode terminals 42 of the first row R1. For example, the first tab 521 may be connected to the main body portion 51 through the first neck 531, the first extension tab 541, and the first auxiliary portion 511, and may be disposed in the first row R1. The second tab 522 may be connected to positive electrode terminals 41 of the second row R2. For example, the second tab 522 may be connected to the main body portion 51 through the second neck 532, the second extension tab 542, and the second auxiliary portion 512, and may be disposed in the second row R2.

The first auxiliary portion 511 may include a pair of first tabs 521 that are electrically connected to connect the negative electrode terminals 42 of two battery cells 10 disposed in the second direction (y-axis direction) in parallel. The first auxiliary portion 511 may avoid (e.g., be disposed around) two battery cells 10 disposed in the direction of the first row R1 to be connected to the main body portion 51 through a space between the two battery cells 10.

The first extension tab 541 may horizontally extend from the first auxiliary portion 511 of the main body portion 51, and may be formed in two branches at both sides of a slit opening formed in the extension direction. The second extension tab 542 may horizontally extend from the second auxiliary portion 512 of the main body portion 51, and may be formed in two branches at both sides of a slit opening formed in the extension direction.

The first necks 531 may be provided in pairs, may be bent downward from the first extension tab 541, and may be disposed on a side surface inside the opening 224 through the opening 224 of the top holder 22. A pair of first tabs 521 may be connected to a pair of first necks 531 to avoid the two battery cells 10 disposed in the direction of the first row R1 and to be connected to the negative electrode terminals 42 of the two battery cells 10.

The second auxiliary portion 512 may include a pair of second tabs 522 that are electrically connected to connect the positive electrode terminals 41 of two battery cells 10 disposed in the second direction (the y-axis direction) in parallel. The second auxiliary portion 512 may avoid (e.g., be disposed around) two battery cells 10 disposed in the second row R2 direction to be connected to the main body portion 51 through a space between the two battery cells 10.

The second extension tab 542 may horizontally extend from the second auxiliary portion 512 of the main body portion 51, and the second neck 532 may be provided in pairs, may be bent downward from the second extension tab 542, and may be disposed on a side surface inside the opening 224 through the opening 224 of the top holder 22. A pair of second tabs 522 may be connected to a pair of second necks 532 to avoid two battery cells 10 disposed in the direction of the second row R2 and to be connected to the positive electrode terminals 41 of the two battery cells 10.

The first tab 521, the first neck 531, the first extension tab 541, and the first auxiliary portion 511 of the first row R1 may make current paths of two battery cells 10 disposed in the first row R1 to the main body portion 51 the same. For example, a voltage difference between the battery cells 10 of the first row R1 may be minimized (e.g., equal to zero).

The second tab 522, the second neck 532, the second extension tab 542, and the second auxiliary portion 512 of the second row R2 may make current paths of two battery cells 10 disposed in the second row R2 to the main body portion 51 the same. For example, a voltage difference between the battery cells 10 of the second row R2 may be minimized (e.g., equal to zero).

In some embodiments, the main body portion 51 may be connected to the first auxiliary portion 511 and the second auxiliary portion 512 to connect two battery cells 10 connected in parallel in the first row R1 and two battery cells 10 connected in parallel in the second row R2 in series.

For example, a current of the two battery cells 10 connected in parallel in the first row R1 may flow to the main body portion 51, and a current of the two battery cells 10 connected in parallel in the second row R2 may flow to the main body portion 51.

In some embodiments, because the first row R1 and the second row R2 share the main body portion 51 of the tab member 50, a voltage difference between the battery cells 10 of the first row R1 and the second row R2 may be minimized (e.g., equal to zero). As a result, it is possible to prevent the lifespan of the battery cells 10 from being shortened.

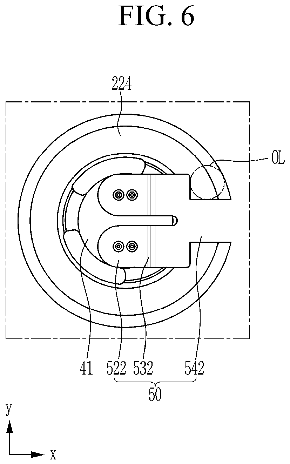

Referring to FIG. 5 and FIG. 6, the first and second extension tabs 541 and 542 and the opening 224 may form an outlet OL at upper portions of the negative and positive electrode terminals 42 and 41. For example, the outlet OL may be set (or disposed) between the tab member 50 and the top holder 22 if there is a step difference between the top holder 22 and the battery cell 10 and the tab member 50 is bent. The outlet OL may dissipate heat generated inside the rechargeable battery module in advance to prevent thermal runaway of the rechargeable battery module so that safety against the thermal runaway is improved.

Referring back to FIGS. 1 to 3 and FIGS. 5 and 7, the insulating tape 60 may include a main body attachment portion 61 attached to the main body portion 51, an extension attachment portion 621 attached to the first and second extension tabs 541 and 542 of the extension portion, and a tab attachment portion 622 attached to the first and second tabs 521 and 522 of the tab portion.

The tab attachment portion 622 may be separated by a cutting line CL with respect to the main body attachment portion 61 and the extension attachment portion 621 which are integrally formed. The main body attachment portion 61 and the extension attachment portion 621 may be attached to the main body portion 51 and the first and second extension tabs 541 and 542 that are the extension portions, and the tab attachment portion 622 may be attached to the first and second tabs 521 and 522 of the tab portion and the negative and positive electrode terminals 42 and 41.

The main body attachment portion 61 and the extension attachment portion 621 that are integrally formed in the insulating tape 60 may be connected to the tab attachment portion 622, and may be separated from each other during an attachment process. To this end, the insulating tape 60 may further include a connection portion 63. Because the connection portion 63 is separated in the attachment process, the main body attachment portion 61 and the extension attachment portion 621 may be attached to the main body portion 51 and the first and second extension tabs 541 and 542, and the tab attachment portion 622 may be attached to the first and second tabs 521 and 522.

For example, the top holder 22 may include a rib 223 protruding between the tab members 50 adjacent to each other in the first direction and extending in the second direction. In some embodiments, the insulating tape 60 may include a cutout portion 64 corresponding to the rib 223. If the insulating tape 60 is disposed above the tab members 50 before the insulating tape 60 is attached to the tab members 50, the cutout portion 64 may be coupled to the rib 223 so that it is possible to prevent a flow of the insulating tape 60.

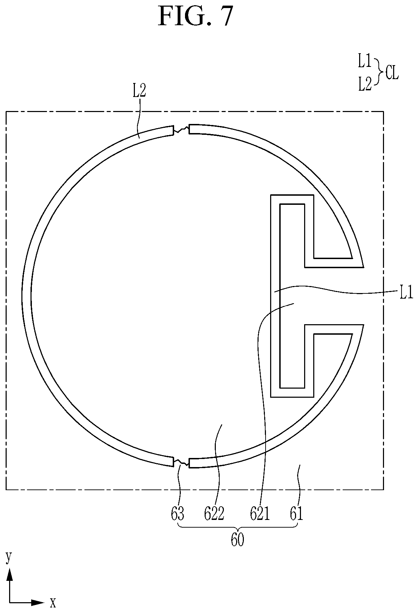

Referring back to FIG. 7, the insulating tape 60 attached to the positive electrode terminal 41 will be described.

The extension attachment portion 621, the main body attachment portion 61, and the tab attachment portion 622 may be integrally formed and may include a T-shaped boundary line L1 and a curved line boundary line L2. The T-shaped boundary line L1 may be formed along a boundary between the extension attachment portion 621 and the tab attachment portion 622. The curved line boundary line L2 may be formed along a boundary between the main body attachment portion 61 and the tab attachment portion 622.

A pair of second necks 532 may be disposed in a straight line at the neck portion, and the first extension tab 541 may be formed in a T-shape at the extension portion so that the T-shaped boundary line L1 is set to correspond to the pair of second necks 532 and the first extension tab 541. The curved boundary line L2 may be formed along the circular opening 224 of the top holder 22 to be connected to the T-shaped boundary line L1.

The connection portion 63 may be formed at the curved line boundary line L2 to connect the main body attachment portion 61 and the tab attachment portion 622. If the insulating tape 60 is attached to the tab member 50, they may be separated from each other. The remaining portion of the curved line boundary line L2 that does not include the connection portion 63 and the T-shaped boundary line L1 may be connected to each other to complete the cutting line CL.

Connection portions 63 may be provided at both ends of a diameter direction of the opening 224 of the holder at positions parallel to the T-shaped boundary line L1. If the main body attachment portion 61 is attached to the main body portion 51, the tab attachment portion 622 may be separated from the main body attachment portion 61 in a balanced state. For example, a separation time difference between the connection portions 63 of both ends may be minimized so that the tab attachment portion 622 is accurately attached to a welding portion between the second tab 522 and the positive electrode terminal 41.

The top holder 22 and the positive electrode terminal 41 may have a step difference between each other, and the second neck 532 may have a length corresponding to the step difference. For example, in the tab member 50, the second neck 532 may be bent at the second auxiliary portion 512 of the main body portion 51 and the second extension tab 542, and the second tab 522 may be bent at the second neck 532.

In some embodiments, the main body attachment portion 61 and the extension attachment portion 621 of the insulating tape 60 that are separated may be attached to the main body portion 51 and the second extension tab 542 of the tab member 50, and the tab attachment portion 622 may be separated from the main body attachment portion 61 through the connection portion 63 to be attached to the second tab 522.

For example, the welding portion between the second tab 522 and the positive electrode terminal 41 may be insulated by the tab attachment portion 622. It is possible to prevent corrosion (for example, galvanic corrosion) of the welding portion between the second tab 522 and the positive electrode terminal 41.

A space between the tab attachment portion 622 of the insulating tape 60 and the second tab 522 may be removed. For example, it is possible to reduce the insulation tape 60 by forming electrical insulation for the welding portion with a minimum area of the insulation tape 60.

For example, because the insulating tape 60 includes the connection portion 63 connecting the main body attachment portion 61 and the tab attachment portion 622, the tab attachment portion 622 may be separated from the main body attachment portion 61 to be attached to the second tab 522 in a process of attaching the main body attachment portion 61 to the main body portion 51. Thus, workability may be improved.

If the insulating tape 60 is attached, the first and second extension tabs 541 and 542 and the opening 224 may form the outlet OL at an upper portion of the positive electrode terminal 41. For example, the outlet OL may be set (or disposed) between the tab member 50 and the top holder 22 if there is a step difference between the top holder 22 and the battery cell 10 and the tab member 50 is bent. The outlet OL may dissipate heat generated inside the rechargeable battery module in advance to prevent thermal runaway of the rechargeable battery module so that safety against the thermal runaway is improved.

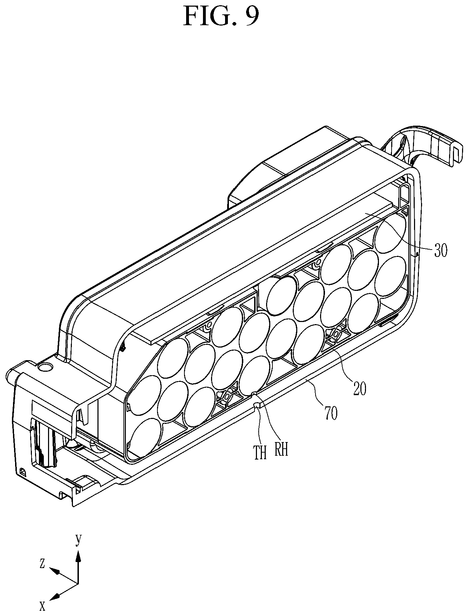

FIG. 8 is a cross-sectional perspective view taken along a line VIII-VIII in a state in which the rechargeable battery module of FIG. 1 is included within a case, and FIG. 9 is a cross-sectional perspective view taken along a line IX-IX in a state in which the rechargeable battery module of FIG. 1 is included within the case.

Referring to FIG. 8 and FIG. 9, the rechargeable battery module may further include the case 70 that accommodates the holder 20. The case 70 may be connected to the outlet OL, and may include a through hole TH at at least one side to dissipate heat. In some embodiments, the holder 20 may further include a corresponding hole RH at a portion corresponding to the through hole TH of the case 70.

If heat is generated in one of the battery cells 10, the heat may be discharged to the outside through the outlet OL of the holder 20 and the through hole TH of the case 70, and may be discharged to the through hole TH through the corresponding hole RH. As a result, thermal runaway of the rechargeable battery module may be prevented.

In some embodiments, there is provided a method of manufacturing a rechargeable battery module. The method may comprise providing a holder that accommodates a plurality of battery cells; installing a tab member installed in holder, the tab member to be welded to electrode terminals of the plurality of battery cells; and installing an insulating tape that insulates the tab member in the holder, wherein the tab member comprises: a main body portion disposed on the holder; an extension portion having a width and extending along at least a portion of the main body portion; a neck portion bent downward from the extension portion to be disposed inside an opening of the holder; and a tab portion bent from the neck portion to be connected to a respective one of the electrode terminals of the plurality of battery cells, and wherein the extension portion and the opening form an outlet at an upper portion of the respective one of the electrode terminals.

The insulating tape may comprise a main body attachment portion attached to the main body portion; an extension attachment portion connected to the main body attachment portion to be attached to the extension portion; and a tab attachment portion separated by a cutting line with respect to the main body attachment portion and the extension attachment portion, the tab attachment portion to be attached to the tab portion and the respective one of the electrode terminals. The method may further comprise attaching the main body attachment portion to the main body portion; attaching the extension attachment portion to the extension portion; and attaching the tab attachment portion to the tab portion and the respective one of the electrode terminals.

The insulating tape may further comprise a connection portion. The method may further comprise connecting the main body attachment portion and the extension attachment portion to the tab attachment portion with the connection portion and separating the main body attachment portion and the extension attachment portion from the tab attachment portion with the connection portion.

Each of the plurality of battery cells may comprise cylindrical rechargeable batteries, and the holder may comprise a plurality of circular openings corresponding to both ends along an axial direction of the plurality of battery cells.

The method may further comprise forming the plurality of circular openings in the holder.

The extension portion may comprise first and second branches disposed on respective sides of a slit opening formed in an extension direction, the neck portion may comprise a first neck portion connected to the first branch of the extension portion and a second neck portion connected to the second branch of the extension portion, and the tab portion may comprise a first tab portion connected to the first neck portion and a second tab portion connected to the second neck portion.

The method may further comprise forming the tab member at least in part by: forming the first and second branches of the extension portion on respective sides of the slit opening formed in the extension direction; forming the first neck portion connected to the first branch of the extension portion and the second neck portion connected to the second branch of the extension portion; and forming the first tab portion connected to the first neck portion and the second tab portion connected to the second neck portion.

The method may further comprise providing a case accommodating the holder and connecting the case to the outlet, wherein the case includes a through hole on at least one side of the case to dissipate heat from an interior of the case.

The method may further comprise arranging the plurality of battery cells in the holder.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**<Description of symbols>**

| | | | |
|---|---|---|---|
| 1: | rechargeable battery module | | |
| 10: | battery cell | 20: | holder |
| 21: | bottom holder | 22: | top holder |
| 23: | fastening member | 24: | coupling portion |
| 25: | protruding portion | 30: | battery management system (BMS) |
| 40: | electrode terminal | 41: | positive electrode terminal |
| 42: | negative electrode terminal | 50: | tab member |
| 51: | main body portion | 54: | output terminal |
| 60: | insulating tape | 61: | main body attachment portion |
| 63: | connection portion | 64: | cutout portion |
| 70: | case | 221: | seating groove |
| 222: | protruding portion | 223: | rib |
| 224: | opening | 511: | first auxiliary portion |
| 512: | second auxiliary portion | 521: | first tab |
| 522: | second tab | 531: | first neck |
| 532: | second neck | 541: | first extension tab |
| 542: | second extension tab | 621: | extension attachment portion |
| 622: | tab attachment portion | C11: | 11th connection |
| C12: | 12th connection | C13: | 13th connection |
| C21: | 21st connection | C22: | 22nd connection |
| C23: | 23rd connection | CL: | cutting line |
| H: | coupling hole | L1: | T-shaped boundary line |
| L2: | curved line boundary line | OL: | outlet |
| R1: | first row | R2: | second row |
| RH: | corresponding hole | TH: | through hole |

## Claims

1. A battery module (1), comprising:
a plurality of battery cells (10);
a holder (20) that accommodates the plurality of battery cells (10);
a tab member (50) installed at the holder (20) to be welded to electrode terminals (40) of the plurality of battery cells (10); and
an insulating tape (60) that insulates the tab member (50),
wherein the tab member (50) comprises:
a main body portion (51) disposed on the holder (20);
an extension portion having a width and extending along at least a portion of the main body portion (51);
a neck portion bent downward from the extension portion to be disposed inside an opening (224) of the holder (20); and a
tab portion bent from the neck portion to be connected to a respective one of the electrode terminals (40) of the plurality of battery cells (10), and wherein the extension portion and the opening (224) form an outlet at an upper portion of the respective one of the electrode terminals (40).

2. The battery module (1) as claimed in claim 1, wherein the insulating tape (60) comprises:
a main body attachment portion (61) attached to the main body portion (51);
an extension attachment portion (621) connected to the main body attachment portion (61) to be attached to the extension portion; and
a tab attachment portion (622) separated by a cutting line with respect to the main body attachment portion (61) and the extension attachment portion (621), the tab attachment portion (622) to be attached to the tab portion and the respective one of the electrode terminals (40).

3. The battery module (1) as claimed in claim 2, wherein the insulating tape (60) further comprises a connection portion (63) connecting the main body attachment portion (61) and the extension attachment portion (621) to the tab attachment portion (622) and separating the main body attachment portion (61) and the extension attachment portion (621) from the tab attachment portion (622) in an attachment process.

4. The battery module (1) as any one of claims 1 to 3 wherein each of the plurality of battery cells (10) comprise cylindrical batteries, and the holder (20) comprises a plurality of circular openings (224) corresponding to both ends along an axial direction of the plurality of battery cells (10).

5. The battery module (1) as any one of claims 1 to 4, wherein the extension portion comprises first and second branches disposed on respective sides of a slit opening (224) formed in an extension direction, the neck portion comprises a first neck (531) portion connected to the first branch of the extension portion and a second neck (532) portion connected to the second branch of the extension portion, and the tab portion comprises a first tab (521) portion connected to the first neck (531) portion and a second tab (522) portion connected to the second neck (532) portion.

6. The battery module (1) as any one of in claims 1 to 5, further comprising a case (70) accommodating the holder (20),
wherein the case (70) is connected to the outlet and includes a through hole on at least one side of the case (70) to dissipate heat from an interior of the case (70).

7. The battery module (1) as any one of claims 1 to 6, further comprising a second tab (522) member.

8. A method of manufacturing a battery module (1), the method comprising:
providing a holder (20) that accommodates a plurality of battery cells (10);
installing a tab member (50) installed in holder (20), the tab member (50) to be welded to electrode terminals (40) of the plurality of battery cells (10); and
installing an insulating tape (60) that insulates the tab member (50) in the holder (20),
wherein the tab member (50) comprises:
a main body portion (51) disposed on the holder (20);
an extension portion having a width and extending along at least a portion of the main body portion (51);
a neck portion bent downward from the extension portion to be disposed inside an opening (224) of the holder (20); and a
tab portion bent from the neck portion to be connected to a respective one of the electrode terminals (40) of the plurality of battery cells (10), and wherein the extension portion and the opening (224) form an outlet at an upper portion of the respective one of the electrode terminals (40).

9. The method as claimed in claim 8, wherein the insulating tape (60) comprises:
a main body attachment portion (61) attached to the main body portion (51);
an extension attachment portion (621) connected to the main body attachment portion (61) to be attached to the extension portion; and
a tab attachment portion (622) separated by a cutting line with respect to the main body attachment portion (61) and the extension attachment portion (621), the tab attachment portion (622) to be attached to the tab portion and the respective one of the electrode terminals (40); and the method further comprises:
attaching the main body attachment portion (61) to the main body portion (51);
attaching the extension attachment portion (621) to the extension portion; and
attaching the tab attachment portion (622) to the tab portion and the respective one of the electrode terminals (40).

10. The method as claimed in claim 9, wherein the insulating tape (60) further comprises a connection portion (63) and the method further comprises connecting the main body attachment portion (61) and the extension attachment portion (621) to the tab attachment portion (622) with the connection portion (63) and separating the main body attachment portion (61) and the extension attachment portion (621) from the tab attachment portion (622) with the connection portion (63).

11. The method as any one of claims 8 to 10, wherein each of the plurality of battery cells (10) comprise cylindrical batteries, and the holder (20) comprises a plurality of circular openings (224) corresponding to both ends along an axial direction of the plurality of battery cells (10).

12. The method as claimed any one of claims 8 to 11, further comprising forming the plurality of circular openings (224) in the holder (20).

13. The method as any one of claims 8 to 12, wherein the extension portion comprises first and second branches disposed on respective sides of a slit opening (224) formed in an extension direction, the neck portion comprises a first neck (531) portion connected to the first branch of the extension portion and a second neck (532) portion connected to the second branch of the extension portion, and the tab portion comprises a first tab (521) portion connected to the first neck (531) portion and a second tab (522) portion connected to the second neck (532) portion.

14. The method as claimed in claim 13, further comprising forming the tab member (50) at least in part by:
forming the first and second branches of the extension portion on respective sides of the slit opening (224) formed in the extension direction;
forming the first neck (531) portion connected to the first branch of the extension portion and the second neck (532) portion connected to the second branch of the extension portion;
and forming the first tab (521) portion connected to the first neck (531) portion and the second tab (522) portion connected to the second neck (532) portion.

15. The method as any one of claims 8 to 14, further comprising providing a case (70) accommodating the holder (20) and connecting the case (70) to the outlet, wherein the case (70) includes a through hole on at least one side of the case (70) to dissipate heat from an interior of the case (70).
